# EUROPEAN PATENT APPLICATION

(11) **EP 4 712 644 A1**
(43) Date of publication of application: **18.03.2026**
(21) Application number: 23936047.2
(22) Date of filing: 09.05.2023
(51) Int. Cl.: H04W 72/21

(54) **METHOD AND APPARATUS FOR SENDING DATA**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2023/093106
(87) International publication number: WO 2024/229720

(57) **Abstract**

Disclosed in the embodiments of the present disclosure are a method and apparatus for sending data, which can be applied to the technical field of communications. The method executed by a terminal device comprises: receiving first information, wherein the first information is used for configuring uplink resources of a target cell; and performing uplink transmission by means of the uplink resources. Therefore, in a RACH-less cell handover process, the terminal device can directly perform the uplink transmission by means of the uplink resources of the target cell configured by a network device, thereby improving the reliability of the uplink transmission.

## Description

### TECHNICAL FIELD

The disclosure relates to the communication field, in particular to a method for sending data and an apparatus.

### BACKGROUND

In a relevant system, when a terminal receives a triggered mobility change command (L1/L2-triggered mobility, LTM), and the terminal no longer needs to obtain a timing advance (TA) via a random access channel (RACH) procedure in a target cell, the terminal may directly perform an uplink transmission in the target cell.

### SUMMARY

Embodiments of the disclosure provide a method for sending data and an apparatus. By configuring an uplink resource of a target cell for a terminal, the terminal may directly perform an uplink transmission using the uplink resource, improving a reliability of the uplink transmission.

According to a first aspect of the embodiments of the disclosure, a method for sending data is provided. The method is performed by a terminal, and includes: receiving first information, in which the first information is used to configure an uplink resource of a target cell; and performing an uplink transmission using the uplink resource.

According to a second aspect of the embodiments of the disclosure, a method for sending data is provided. The method is performed by a network device, and includes: sending first information, in which the first information is used to configure an uplink resource of a target cell; and receiving an uplink transmission via the uplink resource.

According to a third aspect of the embodiments of the disclosure, a communication apparatus is provided, which has part or all of the functions of the terminal in the method described in the first aspect above. For example, the functions of the communication apparatus may include part or all of the functions in the embodiments of the disclosure, or may include the function of independently implementing any one of the embodiments of the disclosure. The functions may be implemented by hardware, or by hardware executing corresponding software. The hardware or software includes one or more units or modules corresponding to the above functions.

In an implementation, the communication apparatus may include a transceiver module and a processing module. The processing module is configured to support the communication apparatus in executing the corresponding functions in the above method. The transceiver module is configured to support communication between the communication apparatus and other devices.

The communication apparatus may further include a storage module. The storage module is coupled to the transceiver module and the processing module, and stores necessary computer programs and data for the communication apparatus.

In an implementation, the communication apparatus includes:

a transceiver module, configured to receive first information, in which the first information is used to configure an uplink resource of a target cell; and perform an uplink transmission using the uplink resource.

According to a fourth aspect of the embodiments of the disclosure, a communication apparatus is provided, which has part or all of the functions of the terminal in the method described in the second aspect above. For example, the functions of the communication apparatus may include part or all of the functions in the embodiments of the disclosure, or may include the function of independently implementing any one of the embodiments of the disclosure. The functions may be implemented by hardware, or by hardware executing corresponding software. The hardware or software includes one or more units or modules corresponding to the above functions.

In an implementation, the communication apparatus may include a transceiver module and a processing module. The processing module is configured to support the communication apparatus in executing the corresponding functions in the above method. The transceiver module is configured to support communication between the communication apparatus and other devices. The communication apparatus may further include a storage module. The storage module is coupled to the transceiver module and the processing module, and stores necessary computer programs and data for the communication apparatus.

In an implementation, the communication apparatus includes:

a transceiver module, configured to sending first information, in which the first information is used to configure an uplink resource of a target cell; and receiving an uplink transmission via the uplink resource.

According to a fifth aspect of the embodiments of the disclosure, a communication apparatus is provided, which includes a processor. When the processor invokes a computer program in a memory, the processor executes the method described in the first aspect above.

According to a sixth aspect of the embodiments of the disclosure, a communication apparatus is provided, which includes a processor. When the processor invokes a computer program in a memory, the processor executes the method described in the second aspect above.

According to a seventh aspect of the embodiments of the disclosure, a communication apparatus is provided, which includes a processor and a memory. The memory stores a computer program. The processor executes the computer program stored in the memory to enable the communication apparatus to execute the method described in the first aspect above.

According to an eighth aspect of the embodiments of the disclosure, a communication apparatus is provided, which includes a processor and a memory. The memory stores a computer program. The processor executes the computer program stored in the memory to enable the communication apparatus to execute the method described in the second aspect above.

According to a ninth aspect of the embodiments of the disclosure, a communication apparatus is provided, which includes a processor and an interface circuit. The interface circuit is configured to receive code instructions and transmit the code instructions to the processor. The processor is configured to run the code instructions to enable the communication apparatus to execute the method described in the first aspect above.

According to a tenth aspect of the embodiments of the disclosure, a communication apparatus is provided, which includes a processor and an interface circuit. The interface circuit is configured to receive code instructions and transmit the code instructions to the processor. The processor is configured to run the code instructions to enable the communication apparatus to execute the method described in the second aspect above.

According to an eleventh aspect of the embodiments of the disclosure, a communication system is provided. The communication system includes the communication apparatus described in the third to fourth aspects, or the communication apparatus described in the fifth to sixth aspects, or the communication apparatus described in the seventh to eighth aspects, or the communication apparatus described in the ninth to tenth aspects.

According to a twelfth aspect of the embodiments of the disclosure, a computer-readable storage medium is provided, which is configured to store instructions used by the above-mentioned receiving end. When the instructions are executed, the receiving end is enabled to execute the method described in the first aspect above.

According to a thirteenth aspect of the embodiments of the disclosure, a computer-readable storage medium is provided, which is configured to store instructions used by the above-mentioned transmitting end. When the instructions are executed, the transmitting end is enabled to execute the method described in the second aspect above.

According to a fourteenth aspect of the embodiments of the disclosure, a computer program product including a computer program is provided. When the computer program product runs on a computer, the computer is enabled to execute the method described in the first aspect above.

According to a fifteenth aspect of the embodiments of the disclosure, a computer program product including a computer program is provided. When the computer program product runs on a computer, the computer is enabled to execute the method described in the second aspect above.

According to a sixteenth aspect of the embodiments of the disclosure, a chip system is provided, which includes at least one processor and at least one interface, configured to support the receiving end in implementing the functions involved in the first aspect, for example, determining or processing at least one of the data and information involved in the above method. In a possible design, the chip system further includes a memory configured to store necessary computer programs and data for the receiving end. The chip system may be composed of chips, or may include one or more chips and other discrete components.

According to a seventeenth aspect of the embodiments of the disclosure, a chip system is provided, which includes at least one processor and at least one interface, configured to support the receiving end in implementing the functions involved in the second aspect, for example, determining or processing at least one of the data and information involved in the above method. In a possible design, the chip system further includes a memory configured to store necessary computer programs and data for the receiving end. The chip system may be composed of chips, or may include one or more chips and other discrete components.

According to an eighteenth aspect of the embodiments of the disclosure, a computer program is provide, which, when runs on a computer, causes the computer to execute the method described in the first aspect above.

According to a nineteenth aspect of the embodiments of the disclosure, a computer program is provide, which, when runs on a computer, causes the computer to execute the method described in the second aspect above.

### BRIEF DESCRIPTION OF THE DRAWINGS

To better illustrate the technical solutions in the embodiments of the disclosure or the background art, the accompanying drawings required for the embodiments of the disclosure or the background art are described below.
FIG. 1 is a schematic diagram of a communication system provided by the disclosure.
FIG. 2 is a flowchart of a method for sending data according to an embodiment.
FIG. 3 is a flowchart of a method for sending data according to another embodiment.
FIG. 4 is a flowchart of a method for sending data according to further another embodiment.
FIG. 5 is a flowchart of a method for sending data according to yet another embodiment.
FIG. 6 is a flowchart of a method for sending data according to yet another embodiment.
FIG. 7 is a signaling interaction diagram of a method for sending data according to an embodiment.
FIG. 8 is a schematic diagram of a communication apparatus according to an embodiment.
FIG. 9 is a schematic diagram of a communication apparatus according to another embodiment.
FIG. 10 is a schematic diagram of a chip according to another embodiment.

### DETAILED DESCRIPTION

To facilitate understanding of the technical solutions of the disclosure, some terms involved in the embodiments of the disclosure are briefly introduced below.

### 1. Cell

A cell, also known as a cellular cell, refers to an area covered by a base station or a part of a base station (sector antenna) in a cellular mobile communication system. Within this area, a terminal may reliably communicate with the base station via a wireless channel. When the terminal moves, a serving cell of the terminal switches from a current cell to a new cell, and the cell to be switched to is a target cell.

### 2. Radio resource control (RRC)

RRC, also referred to as radio resource management or radio resource allocation, refers to performing wireless resource managing, controlling, and scheduling via certain strategies and means. On the premise of meeting quality of service requirements, it aims to fully utilize limited wireless network resources as much as possible, ensure coverage of the planned area, and maximize service capacity and resource utilization efficiency.

### 3. Medium access control (MAC) control element (CE)

A MAC CE is a channel for exchanging control information between a terminal and a network, in addition to RRC messages and non-access stratum (NAS) messages. The MAC CE exchanges control information related to a MAC layer.

### 4. Downlink control information (DCI)

DCI refers to control information transmitted on a physical downlink control channel (PDCCH) and related to physical uplink and downlink shared channels. Such DCI information includes several relevant contents such as resource block (RB) allocation information and modulation scheme.

To better understand a method for sending data and an apparatus disclosed in the embodiments of the disclosure, the following first describes a communication system applicable to the embodiments of the disclosure.

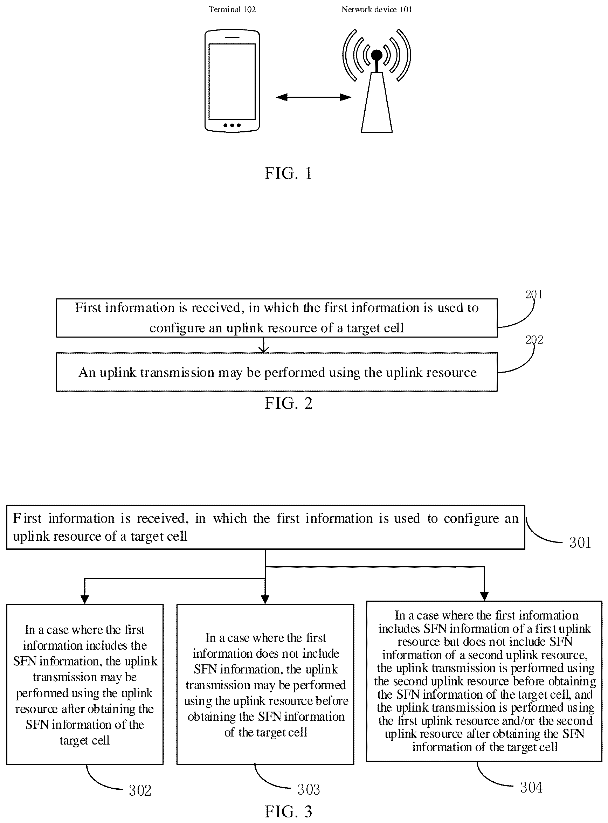

Please refer to FIG. 1, which is a schematic diagram of a communication system provided by an embodiment of the disclosure. This communication system may include but is not limited to one network-side device and one terminal. The number and form of devices shown in FIG. 1 are for illustration only and do not constitute a limitation on the embodiments of the disclosure. In practical applications, the communication system may include two or more network-side devices and two or more terminals. The communication system shown in FIG. 1 includes one network-side device 101 and one terminal 102.

It should be noted that the technical solutions of the embodiments of the disclosure may be applied to various communication systems. For example: a long term evolution (LTE) system, a 5th generation (5G) mobile communication system, a 5G new radio (NR) system, or other future new-type mobile communication systems.

The network-side device 101 in the embodiments of the disclosure is an entity on the network side for transmitting or receiving signals, and is a device for communicating with a terminal. The network-side device 101 may be a base transceiver station (BTS) in a global system for mobile communications (GSM) system or a code division multiple access (CDMA) system, a nodeB (NB) in a wideband code division multiple access (WCDMA) system, an evolved nodeB (eNB or eNodeB) in an LTE system, a wireless controller in a cloud radio access network (CRAN) scenario, a radio network controller (RNC), a base station controller (BSC), a home base station (e.g., home evolved nodeB or home nodeB, HNB), a baseband unit (BBU), or the network-side device may be a relay station, an access point, a vehicle-mounted device, a wearable device, a network-side device in a 5G network, a network-side device in a future evolved public land mobile network (PLMN) network, etc. The network-side device 101 may also be an access point (AP) in a wireless local area ntwork (WLAN), a wireless relay node, a wireless backhaul node, a transmission point (TP), or a transmission and reception point (TRP), etc., or a gNB or a transmission point (TRP or TP) in a new radio (NR) system, or one or a group of antenna panels (including a plurality of antenna panels) of a base station in a 5G system, or a network node constituting a gNB or a transmission point, such as a baseband unit (BBU) or a distributed unit (DU), etc. The embodiments of the disclosure do not limit the specific technology and specific device form adopted by the network-side device. The network-side device provided in the embodiments of the disclosure may be composed of a central unit (CU) and a distributed unit (DU), where the CU may also be called a control unit. The structure using CU-DU may split the network-side device (e.g., protocol layers of the network-side device), with functions of some protocol layers placed in the CU for centralized control, and functions of the remaining part or all of the protocol layers distributed in the DU, with the CU centrally controlling the DU.

The terminal 102 in the embodiments of the disclosure may be a device that provides voice/data connectivity to users, such as a handheld device with wireless connection function, a vehicle-mounted device, etc. Some examples of the terminal include: a mobile phone, a tablet computers, a laptop computer, a palmtop computer, a mobile internet devices (MID), a wearable device, a virtual reality (VR) device, a augmented reality (AR) device, a wireless terminal in industrial control, a wireless terminal in self-driving, a wireless terminal in remote medical surgery, a wireless terminal in smart grids, a wireless terminal in transportation safety, a wireless terminal in smart cities, a wireless terminal in smart homes, a cellular phone, a cordless phone, a session initiation protocol (SIP) phone, a wireless local loop (WLL) station, a personal digital assistant (PDA), a handheld device with wireless communication function, a computing device or other processing devices connected to a wireless modem, a vehicle-mounted device, a wearable device, a terminal in the 5G network, a terminal in the future evolved PLMN network, and/or any other suitable devices for communicating over a wireless communication system. The embodiments of the disclosure do not limit this.

The wearable device, also referred to as a wearable smart device, is a general term for wearable devices developed by applying wearable technology to intelligently design daily wearables, such as a glass, a bracelet, a watch, clothing, shoes, and the like. The wearable device is a portable device that is either worn directly on the body or integrated into the user's clothing or accessories. The wearable device is not merely a hardware device, also achieves powerful functions through software support, data interaction, and cloud interaction. In a broad sense, the wearable smart device includes those with full functions and a large size, which may implement complete or partial functions independently without relying on a smartphone (e.g., a smartwatch or smart glasses), as well as those that focus only on a specific type of application function and need to be used in conjunction with other devices such as the smartphone (e.g., various smart bracelets and smart jewelry for physical sign monitoring).

In addition, in the embodiments of the disclosure, the terminal 102 may also be a terminal in an Internet of Things (IoT) system. IoT is an important part of the future development of information technology, and its main technical feature is connecting objects to the network through communication technology, thereby realizing an intelligent network for human-machine interconnection and thing-thing interconnection.

Furthermore, in the embodiments of the disclosure, the terminal 102 may also include a smart printer, a train detector, and a gas station sensor. Their main functions include collecting data (for some terminals), receiving control information and downlink data from a network-side device, and transmitting electromagnetic waves to send uplink data to the network-side device.

It should be noted that the technical solutions of the embodiments of the disclosure may be applied to various communication systems, for example, the LTE system, the 5G mobile communication system, the 5G NR system, or other future new-type mobile communication systems.

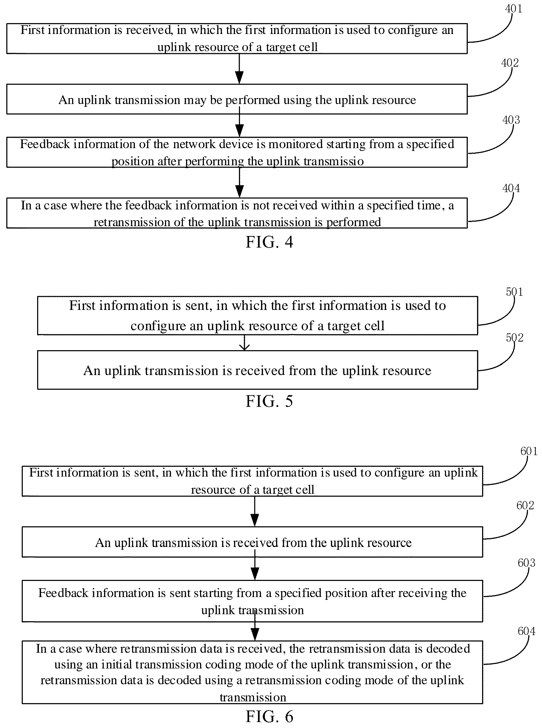

The terminal provided in the embodiments of the disclosure may execute the method in the embodiments shown in FIGs. 2 to 4. The network device provided in the embodiments of the disclosure may execute the method in the embodiments shown in FIGs. 5 to 6.

It should be understood that the communication system described in the embodiments of the disclosure is for the purpose of explaining the technical solutions of the embodiments more clearly, and does not constitute a limitation on the technical solutions provided by the embodiments of the disclosure. As those of ordinary skill in the art know, with the evolution of system architectures and the emergence of new service scenarios, the technical solutions provided by the embodiments of the disclosure are also applicable to similar technical problems.

**In** addition, to facilitate understanding of the embodiments of the disclosure, the following notes are provided.

First, in the disclosure, terms like "first", "second" and various numerical designations are only used for distinction to facilitate description, and are not intended to limit the scope of the embodiments of the disclosure. For example, they may be used to distinguish different types of information, different terminals, etc.

Second, the "protocol" mentioned in the embodiments of the disclosure may refer to standard protocols in the field of communications, including but not limited to the LTE protocol, NR protocol, and related protocols applied in future communication systems, which is not limited by the disclosure.

Third, the embodiments of the disclosure disclose a plurality of implementations to clearly illustrate the technical solutions of the disclosure. Those skilled in the art understand that the plurality of embodiments provided herein may be implemented independently, or implemented in combination with methods of other embodiments of the disclosure, or implemented independently or in combination with certain methods in other related arts. The disclosure does not limit this.

**In** a 5G system, a network device may provide a terminal with a plurality of candidate cells (or cell groups). The network device may control the terminal to switch among the plurality of candidate cells (or cell groups) via layer 1 (L1) signaling (e.g., downlink control information (DCI)) or layer 2 (L2) signaling (e.g., medium access control (MAC) control element (CE)). This control signaling may also be referred to as "cell change control signaling", and the corresponding process may be called an LTM process.

For example, an active cell (or cell group) is switched from "candidate cell (or cell group)-1" to "candidate cell (or cell group)-2".

One serving cell (or cell group) may correspond to one or more candidate cells (or cell groups).

Before the terminal switches the serving cell to a target cell (e.g., before a handover or a secondary cell group (SCG) change), the terminal may send an uplink signal to obtain a timing advance (TA) of the target cell. The TA refers to a timing advance required for the terminal to send the uplink signal in the target cell.

When the terminal receives a triggered mobility change command (LTM), and the terminal no longer needs to obtain the TA via a random access channel (RACH) procedure in the target cell, the terminal may directly perform an uplink transmission in the target cell.

Therefore, in a RACH-less cell change process, how to provide an uplink resource for the terminal to perform the uplink transmission in the target cell is a problem that needs to be solved.

In the disclosure, the terminal first receives first information for configuring the uplink resource of the target cell, and then performs the uplink transmission using the uplink resource. Thus, in the RACH-less cell change process, the terminal may directly use the uplink resource of the target cell configured by the network device for the uplink transmission, thereby improving a reliability of the uplink transmission.

The following describes in detail a method and apparatus for sending data provided by the disclosure with reference to the accompanying drawings.

Referring to FIG. 2, FIG. 2 is a flowchart of a method for sending data according to an embodiment. As shown in FIG. 2, the method is performed by a terminal and may include, but is not limited to, the following steps.

At step 201, first information is received, in which the first information is used to configure an uplink resource of a target cell.

In some implementations, the first information may be received via at least one of: an RRC message, DCI, or a MAC CE.

For example, the first information may be received only via the RRC message, or may be received jointly via the RRC message and the DCI, or may be received jointly via the RRC message and the MAC CE, or may be received only via the DCI or the MAC CE. The disclosure is not specifically limited thereto.

The uplink resource refers to a resource used by the terminal for an uplink transmission during a dynamic cell (or cell group) change process.

In some implementations, the first information may include at least one of:
a resource period, a resource start position, time-frequency domain resource configuration information, a beam identifier corresponding to a time-frequency resource, reference time information, or a time position of the target cell relative to a serving cell.

The resource period refers to a period of the uplink resource. For example, the resource period may be 1 slot, i.e., 14 orthogonal frequency division multiplexing (OFDM) symbols. The disclosure is not specifically limited thereto.

In some implementations, the resource start position includes at least one of:
a resource start symbol number, a resource start slot number, a resource start subframe number, a resource start system frame number (SFN), a first relative position relative to a first resource for receiving the first information, or a second relative position relative to a second resource for sending feedback information of the first information.

It should be noted that the terminal and the network device need to maintain a consistent understanding of a time position for sending and receiving a signal. Therefore, a time resource of a cell need to be divided and numbered in accordance with an agreed time unit. The time unit includes: system frame, subframe, slot, and OFDM symbol. Thus, the first information may include the resource start symbol number, the resource start slot number, the resource start subframe number, and the resource start SFN, so that the terminal may use the uplink resource accurately.

In some implementations, the first relative position to the first resource for receiving the first information may be indicated by the DCI or the MAC CE, or may be agreed upon by a protocol.

For example, the first relative position indicated by the DCI or the MAC CE is x₁, and a position where the terminal receives the first information is n₁^{-th} slot, then the resource start position is a slot position of "n₁+x₁".

In some implementations, the second relative position to the second resource for sending the feedback information of the first information may be indicated by the DCI or the MAC CE, or may be agreed upon by a protocol.

For example, the second relative position indicated by the DCI or the MAC CE is x₂, a position where the terminal receives the first information is the n₂^{-th} slot, and a position for sending the feedback information is the (n₂+m)^{-th} slot, then the resource start position is a slot position of "n₂+x₂+m".

The time-frequency domain resource configuration information may include any one of the following:
frequency-domain resource configuration information, e.g., a number or numbering of physical resource blocks (PRBs); and
time-domain resource configuration information, e.g., a number of OFDM symbols.

The beam identifier corresponding to the time-frequency domain resource may include any one of: synchronization signal block (SSB) identifier; and channel-state-information reference signal (CSI-RS) identifier.

In some implementations, the reference time information may include at least one of: reference symbol number, reference slot number, reference subframe number, or reference SFN.

For example, the reference SFN is 10, and the resource start position may be a time position of the reference SFN numbered 10 that is closest to a current time.

In some implementations, the time position of the target cell relative to the serving cell may include at least one of: a time offset of the target cell relative to the serving cell, or a time position of the target cell.

In some implementations, the time offset of the target cell relative to the serving cell may include at least one of: a symbol offset (ofdmDiff) of the target cell relative to the serving cell, a slot offset (slotDiff) of the target cell relative to the serving cell, a subframe offset (subframeDiff) of the target cell relative to the serving cell, a system frame offset (sfnDiff) of the target cell relative to the serving cell, or a time unit offset of the target cell relative to the serving cell. The time unit refers to a minimum time unit for synchronization between the terminal and a cell.

For example, when the time offset between the target cell and the serving cell is +3 OFDM symbols, a position of OFDM symbol number 1 in the serving cell corresponds to a position of OFDM symbol number 4 (i.e., 1+3) in the target cell.

For another example, when the time offset between the target cell and the serving cell is -3 OFDM symbols, a position of OFDM symbol number 1 in slot number 1 of the serving cell corresponds to a position of OFDM symbol number 11 in slot number 0 of the target cell. Specifically, a range of OFDM symbol numbers within one slot is [0, 13], 1-3=-2, so the corresponding slot number in the target cell is 1-1=0, and the OFDM symbol number is 13-2=11.

For another example, when the time offset between the target cell and the serving cell is -3 OFDM symbols, a position of OFDM symbol number 1 in slot number 0 of SFN number 1 in the serving cell corresponds to a position of OFDM symbol number 11 in slot number 0 (1-1) of SFN number 0 (i.e., 1-1) in the target cell. Specifically, a range of slot numbers within one SFN is [0, 9], and a range of OFDM symbol numbers within one slot is [0, 13], 1-3=-2, so the corresponding SFN number is 1-1= 0, the corresponding slot number is 1-1= 0, and the corresponding OFDM symbol number is 13-2=11.

The time position of the target cell may include: resource start symbol number, resource start slot number, resource start subframe number, and resource start SFN. That is, the time position of the target cell relative to the serving cell may be determined based on the time position of the target cell.

In some implementations, the first information may be received jointly via the RRC message and the DCI, or jointly via the RRC message and the MAC CE. In such cases, the RRC message contains different information from information contained in the DCI or the MAC CE.

For example, the RRC message may include at least: the resource period. The DCI or the MAC CE may include at least: the resource start position, the time-frequency domain resource configuration information, the beam identifier corresponding to the time-frequency domain resource, and other information.

At step 202, an uplink transmission may be performed using the uplink resource.

In this embodiment of the disclosure, after determining the uplink resource of the target cell, the uplink transmission may be performed using the uplink resource.

Performing the uplink transmission may include sending uplink data to the network device, sending uplink signaling to the network device, etc. The disclosure is not specifically limited thereto.

In some implementations, in a case where there is no uplink transmission corresponding to a radio bearer (RB), agreed data is sent using the uplink resource

The RB is used to send control information and data.

The agreed data may be a dummy data packet, for example, a MAC service data unit (SDU) composed of dummy bits, a padding bit, or a specific control signaling, such as a padding buffer status report (BSR) MAC CE.

In summary, the terminal first receives the first information for configuring the uplink resource of the target cell, and then performs the uplink transmission using the uplink resource. Thus, in the RACH-less cell change process, the terminal may directly perform the uplink transmission using the uplink resource of the target cell configured by the network device, thereby improving the reliability of the uplink transmission.

Referring to FIG. 3, FIG. 3 is a flowchart of a method for sending data according to an embodiment. As shown in FIG. 3, the method is performed by a terminal and may include, but is not limited to, the following steps.

At step 301, first information is received, in which the first information is used to configure an uplink resource of a target cell.

In some implementations, a usage mode of the uplink resource may be determined based on a protocol agreement, or may be determined according to received second information.

The second information may be information sent by the network device to indicate the usage mode of the uplink resource.

In some implementations, the usage mode of the uplink resource may include any one of: the uplink resource being used for an initial transmission of data, and the uplink resource being used for a one-time transmission of data.

The uplink resource being used for the initial transmission of data may mean that the uplink resource is used for transmitting one piece of data; that is, the terminal may use the uplink resource to perform both initial transmission and retransmission of the uplink transmission.

The uplink resource being used for the one-time transmission of data may mean that the terminal may only use the uplink resource for one uplink transmission.

In some implementations, the terminal may use, based on whether SFN information of the target cell needs to be obtained, the uplink resource according to a protocol-agreed rule. The protocol-agreed rule for using the uplink resource may include any one of the following steps 302 to 304.

At step 302, in a case where the first information includes the SFN information, the uplink transmission may be performed using the uplink resource after obtaining the SFN information of the target cell.

It is understandable that in the case where the first information includes the SFN information, the terminal may use the uplink resource after obtaining the SFN information of the target cell. Therefore, the uplink transmission is performed using the uplink resource after the SFN information of the target cell is obtained (e.g., after reading a management information base (MIB)).

At step 303, in a case where the first information does not include SFN information, the uplink transmission may be performed using the uplink resource before obtaining the SFN information of the target cell.

It is understandable that in the case where the first information does not include the SFN information, the terminal may only use the uplink resource after obtaining the SFN information of the target cell. Therefore, the uplink transmission is performed using the uplink resource before the SFN information of the target cell is obtained (e.g., before reading the MIB).

At step 304, in a case where the first information includes SFN information of a first uplink resource but does not include SFN information of a second uplink resource, the uplink transmission is performed using the second uplink resource before obtaining the SFN information of the target cell, and the uplink transmission is performed using the first uplink resource and/or the second uplink resource after obtaining the SFN information of the target cell.

It should be noted that the first information may configure one or more uplink resources. The disclosure imposes no limitation in this regard.

The first uplink resource may refer to an uplink resource including the SFN information configured by the first information. The second uplink resource may refer to an uplink resource configured by the first information that do not include the SFN information.

It is understandable that in a case where the terminal does not obtain the SFN information of the target cell, the terminal may only use the second uplink resource for the uplink transmission. After obtaining the SFN information of the target cell, the terminal may use either the first uplink resource or the second uplink resource for the uplink transmission.

In summary, the terminal first receives the first information for configuring the uplink resource of the target cell. Then, the terminal may further use the uplink resource according to the protocol-agreed rule, based on whether the terminal needs to obtain the SFN information of the target cell. Thus, in the RACH-less cell change process, the terminal may perform the uplink transmission using the uplink resource in accordance with the usage rule of the uplink resource configured by the network device. This not only improves a reliability of uplink transmission but also enhances an efficiency of resource utilization.

Referring to FIG. 4, FIG. 4 is a flowchart of a method for sending data according to an embodiment. As shown in FIG. 4, the method is performed by a terminal and may include, but is not limited to, the following steps.

At step 401, first information is received, in which the first information is used to configure an uplink resource of a target cell.

At step 402, an uplink transmission may be performed using the uplink resource.

At step 403, feedback information of the network device is monitored starting from a specified position after performing the uplink transmission.

In some implementations, the specified position may be determined based on a protocol agreement, or be determined according to an instruction from the network device.

The protocol agreement or the instruction of the network device may specifically be a slot, a subframe, or a system frame. Or, the protocol agreement or the instruction of the network device may be a time period, and the specified position is further determined based on the time period.

For example, in a case where the instruction of the network device or the protocol agreement is a time period of "a" slots, the specified position is a moment after "a" slots following the uplink transmission. In a case where the terminal performs the uplink transmission in a slot b, the terminal monitors the feedback information of the network device starting from a position a+b. Here, a value of "a" may also be "0", meaning that the monitoring of the feedback information of the network device may start after performing the uplink transmission. The disclosure imposes no limitation in this regard.

In some implementations, the feedback information from the network device may be any one of:
a MAC CE, such as a contention resolution MAC CE;
a cell change RRC feedback message; or
physical layer control information, such as a cell-radio network temporary identifier (C-RNTI) PDCCH scheduled for an uplink physical uplink shared channel (PUSCH) hybrid automatic repeat request (HARQ).

At step 404, in a case where the feedback information is not received within a specified time, a retransmission of the uplink transmission is performed.

The specified time may be indicated by the network device or be determined based on a protocol agreement. The disclosure is not specifically limited thereto.

In some implementations, the retransmission of the uplink transmission is performed using an initial transmission coding mode of the uplink transmission; or the retransmission of the uplink transmission is performed using a retransmission coding mode of the uplink transmission.

The retransmission of the uplink transmission is performed using the initial transmission coding mode of the uplink transmission, i.e., an HARQ initial transmission, that is, another initial transmission of a MAC protocol data unit (PDU) corresponding to the uplink PUSCH HARQ.

The retransmission of the uplink transmission is performed using the retransmission coding mode of the uplink transmission, i.e., an HARQ retransmission. That is, data buffered in an HARQ entity is retransmitted.

In some implementation, the retransmission of the uplink transmission is performed using the uplink resource; or the retransmission of the uplink transmission is performed using a resource indicated by a physical control channel.

The resource indicated by the physical control channel may be used for a PDCCH-scheduled retransmission. The disclosure imposes no limitation in this regard.

In some implementations, after the terminal receives the feedback information from the network device, the configured uplink resource is no longer used. For example, the terminal may discard or suspend the uplink resource; or delete the uplink resource configuration. The disclosure is not specifically limited thereto.

In summary, the terminal first receives the first information for configuring the uplink resource of the target cell, then performs the uplink transmission using the uplink resource, monitoring the feedback information of the network device starting from the specified position after the uplink transmission, and finally performs the retransmission of the uplink transmission in a case where the feedback information is not received within the specified time. Thus, the uplink transmission is retransmitted in a case where the feedback information is not received within the specified time, which further improves the reliability of uplink transmission.

Referring to FIG. 5, FIG. 5 is a flowchart of a method for sending data according to an embodiment. As shown in FIG. 5, the method is performed by a network device and may include, but is not limited to, the following steps.

At step 501, first information is sent, in which the first information is used to configure an uplink resource of a target cell.

In some implementations, the first information may be sent via at least one of: an RRC message, DCI, or a MAC CE.

For example, the first information may be sent only via the RRC message, or may be sent jointly via the RRC message and the DCI, or may be sent jointly via the RRC message and the MAC CE, or may be sent only via the DCI or the MAC CE. The disclosure is not specifically limited thereto.

The uplink resource refers to a resource used by the terminal for an uplink transmission during a dynamic cell (or cell group) change process.

In some implementations, the first information may include at least one of:
a resource period, a resource start position, time-frequency domain resource configuration information, a beam identifier corresponding to a time-frequency resource, reference time information, or a time position of the target cell relative to a serving cell.

The resource period refers to a period of the uplink resource. For example, the resource period may be 1 slot, i.e., 14 OFDM symbols. The disclosure is not specifically limited thereto.

In some implementations, the resource start position includes at least one of:
a resource start symbol number, a resource start slot number, a resource start subframe number, a resource start SFN, a first relative position relative to a first resource for receiving the first information, or a second relative position relative to a second resource for sending feedback information of the first information.

It should be noted that the terminal and the network device need to maintain a consistent understanding of a time position for sending and receiving a signal. Therefore, a time resource of a cell need to be divided and numbered in accordance with an agreed time unit. The time unit includes: system frame, subframe, slot, and OFDM symbol. Thus, the first information may include the resource start symbol number, the resource start slot number, the resource start subframe number, and the resource start SFN, so that the terminal may use the uplink resource accurately.

In some implementations, the first relative position to the first resource for receiving the first information may be indicated by the DCI or the MAC CE, or may be agreed upon by a protocol.

For example, the first relative position indicated by the DCI or the MAC CE is x₁, and a position where the terminal receives the first information is n₁^{-th} slot, then the resource start position is a slot position of "n₁+x₁".

In some implementations, the second relative position to the second resource for sending the feedback information of the first information may be indicated by the DCI or the MAC CE, or may be agreed upon by a protocol.

For example, the second relative position indicated by the DCI or the MAC CE is x₂, a position where the terminal receives the first information is the n₂^{-th} slot, and a position for sending the feedback information is the (n₂+m)^{-th} slot, then the resource start position is a slot position of "n₂+x₂+m".

The time-frequency domain resource configuration information may include any one of the following:
frequency-domain resource configuration information, e.g., a number or numbering of PRBs; and
time-domain resource configuration information, e.g., a number of OFDM symbols.

The beam identifier corresponding to the time-frequency domain resource may include any one of: SSB identifier; and CSI-RS identifier.

In some implementations, the reference time information may include at least one of: reference symbol number, reference slot number, reference subframe number, or reference SFN.

For example, the reference SFN is 10, and the resource start position may be a time position of the reference SFN numbered 10 that is closest to a current time.

In some implementations, the time position of the target cell relative to the serving cell may include at least one of: a time offset of the target cell relative to the serving cell, or a time position of the target cell.

In some implementations, the time offset of the target cell relative to the serving cell may include at least one of: a symbol offset (ofdmDiff) of the target cell relative to the serving cell, a slot offset (slotDiff) of the target cell relative to the serving cell, a subframe offset (subframeDiff) of the target cell relative to the serving cell, a system frame offset (sfnDiff) of the target cell relative to the serving cell, or a time unit offset of the target cell relative to the serving cell. The time unit refers to a minimum time unit for synchronization between the terminal and a cell.

For example, when the time offset between the target cell and the serving cell is +3 OFDM symbols, a position of OFDM symbol number 1 in the serving cell corresponds to a position of OFDM symbol number 4 (i.e., 1+3) in the target cell.

For another example, when the time offset between the target cell and the serving cell is -3 OFDM symbols, a position of OFDM symbol number 1 in slot number 1 of the serving cell corresponds to a position of OFDM symbol number 11 in slot number 0 of the target cell. Specifically, a range of OFDM symbol numbers within one slot is [0, 13], 1-3=-2, so the corresponding slot number in the target cell is 1-1=0, and the OFDM symbol number is 13-2=11.

For another example, when the time offset between the target cell and the serving cell is -3 OFDM symbols, a position of OFDM symbol number 1 in slot number 0 of SFN number 1 in the serving cell corresponds to a position of OFDM symbol number 11 in slot number 0 (1-1) of SFN number 0 (i.e., 1-1) in the target cell. Specifically, a range of slot numbers within one SFN is [0, 9], and a range of OFDM symbol numbers within one slot is [0, 13], 1-3=-2, so the corresponding SFN number is 1-1= 0, the corresponding slot number is 1-1= 0, and the corresponding OFDM symbol number is 13-2=11.

The time position of the target cell may include: resource start symbol number, resource start slot number, resource start subframe number, and resource start SFN. That is, the time position of the target cell relative to the serving cell may be determined based on the time position of the target cell.

In some implementations, when the first information may be sent jointly via the RRC message and the DCI, or jointly via the RRC message and the MAC CE, the RRC message contains different information from information contained in the DCI or the MAC CE.

For example, the RRC message may include at least: the resource period. The DCI or the MAC CE may include at least: the resource start position, the time-frequency domain resource configuration information, the beam identifier corresponding to the time-frequency domain resource, and other information.

At step 502, an uplink transmission is received from the uplink resource.

In some implementations, in a case where the received uplink transmission is agreed data, it is determined that there is no uplink transmission corresponding to an RB in a terminal.

The RB is used to send control information and data.

The agreed data may be a dummy data packet, for example, a MAC SDU composed of dummy bits, a padding bit, or a specific control signaling, such as a padding BSR MAC CE.

In summary, the network device first sends the first information for configuring the uplink resource of the target cell, and then receives the uplink transmission via the uplink resource. Thus, in the RACH-less cell change process, the terminal may directly perform the uplink transmission using the uplink resource of the target cell configured by the network device, thereby improving the reliability of the uplink transmission.

Referring to FIG. 6, FIG. 6 is a flowchart of a method for sending data according to an embodiment. As shown in FIG. 6, the method is performed by a network device and may include, but is not limited to, the following steps.

At step 601, first information is sent, in which the first information is used to configure an uplink resource of a target cell.

At step 602, an uplink transmission is received from the uplink resource.

In some implementations, the network device may further send second information, in which the second information indicates a usage mode of the uplink resource.

In some implementations, the usage mode of the uplink resource may include any one of: the uplink resource being used for an initial transmission of data, and the uplink resource being used for a one-time transmission of data.

The uplink resource being used for the initial transmission of data may mean that the uplink resource is used for transmitting one piece of data; that is, the terminal may use the uplink resource to perform both initial transmission and retransmission of the uplink transmission.

The uplink resource being used for the one-time transmission of data may mean that the terminal may only use the uplink resource for one uplink transmission.

Thus, determining the usage mode of the uplink resource may further improve the efficiency of resource utilization.

At step 603, feedback information is sent starting from a specified position after receiving the uplink transmission.

In some implementations, the specified position may be determined based on a protocol agreement, or may be indicated by the network device to the terminal.

The protocol agreement may specifically be a slot, a subframe, or a system frame. Or, the protocol agreement may be a time period, and the specified position is further determined based on the time period.

For example, in a case where the protocol agreement is a time period of "a" slots, the specified position is a moment after "a" slots following the reception of the uplink transmission. In a case where the network device receives the uplink transmission in a slot b, the network device starts sending the feedback information at a position a+b. Here, a value of "a" may also be "0", meaning that the feedback information may start being stent after receiving the uplink transmission. The disclosure imposes no limitation in this regard.

In some implementations, the feedback information from the network device may be any one of:
a MAC CE, such as a contention resolution MAC CE;
a cell change RRC feedback message; or
physical layer control information, such as a C-RNTI PDCCH scheduled for an uplink PUSCH HARQ.

At step 604, in a case where retransmission data is received, the retransmission data is decoded using an initial transmission coding mode of the uplink transmission, or the retransmission data is decoded using a retransmission coding mode of the uplink transmission.

It should be noted that in a case where the terminal does not receive the feedback information within a specified time, the terminal may perform the retransmission of the uplink transmission using either the initial transmission coding mode of the uplink transmission or the retransmission coding mode of the uplink transmission. Therefore, the network device may receive the retransmission data, and then decode the retransmission data using either the initial transmission coding mode of the uplink transmission or the retransmission coding mode of the uplink transmission.

In some implementations, the network device may receive the retransmission data from the uplink resource, or from a resource indicated by a physical control channel.

The resource indicated by the physical control channel may be used for a PDCCH-scheduled retransmission. The disclosure imposes no limitation in this regard.

In summary, the network device first sends the first information for configuring the uplink resource of the target cell, then receives the uplink transmission via the uplink resource, sends the feedback information starting from the specified position after receiving the uplink transmission, and finally decodes, in a case of receiving the retransmission data, the retransmission data using either the initial transmission coding mode of the uplink transmission or the retransmission coding mode of the uplink transmission. Thus, in a case where the terminal does not receive the feedback information within the specified time, the uplink transmission may be retransmitted, which further improves the reliability of uplink transmission.

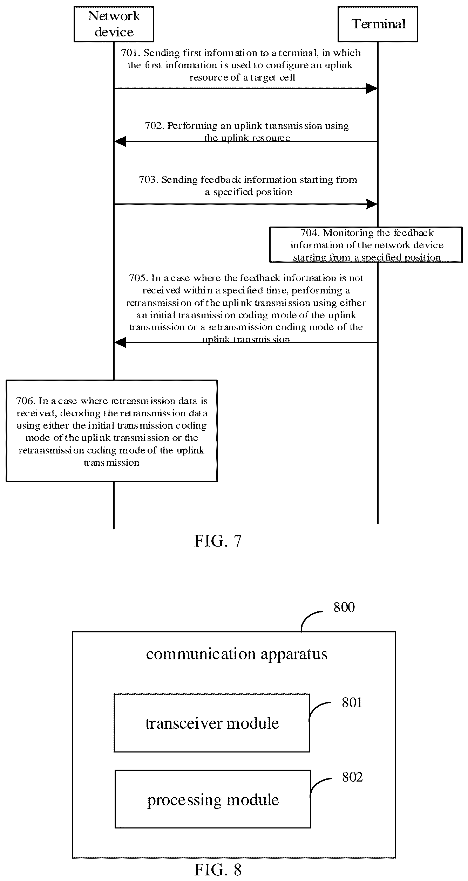

Referring to FIG. 7, FIG. 7 is a signaling interaction diagram of a method for sending data according to an embodiment. As shown in FIG. 7, the method may include, but is not limited to, the following steps.

At step 701, a network device sends first information to a terminal, in which the first information is used to configure an uplink resource of a target cell.

At step 702, the terminal performs an uplink transmission using the uplink resource.

At step 703, the network device sends feedback information starting from a specified position after receiving the uplink transmission

At step 704, the terminal monitors the feedback information of the network device starting from a specified position after performing the uplink transmission.

At step 705, in a case where the feedback information is not received within a specified time, the terminal performs a retransmission of the uplink transmission using either an initial transmission coding mode of the uplink transmission or a retransmission coding mode of the uplink transmission.

At step 706, in a case where retransmission data is received, the network device decodes the retransmission data using either the initial transmission coding mode of the uplink transmission or the retransmission coding mode of the uplink transmission.

Thus, in the RACH-less cell change process, the terminal may directly perform the uplink transmission using the uplink resource of the target cell configured by the network device, and perform the retransmission of the uplink transmission when no feedback information is received, thereby improving the reliability of uplink transmission.

Referring to FIG. 8, FIG. 8 is a schematic diagram of a communication apparatus provided by an embodiment of the disclosure. The communication apparatus 800 shown in FIG. 8 may include a transceiver module 801 and a processing module 802. The transceiver module may include a sending module and/or a receiving module, where the sending module is configured to implement a sending function and the receiving module is configured to implement a receiving function. The transceiver module may implement the sending function and/or the receiving function.

The communication apparatus 800 may be a terminal, an apparatus within the terminal, or an apparatus that may be used in conjunction with the terminal.

When the communication apparatus 800 is on a terminal side,
the transceiver module 801 is configured to receive first information, in which the first information is used to configure an uplink resource of a target cell; and
the transceiver module 801 is further configured to perform an uplink transmission using the uplink resource.

In some implementation, receiving the first information includes:
receiving the first information via at least one of: an RRC message, DCI, or a MAC CE.

In some implementation, the first information includes at least one of:
a resource period, a resource start position, time-frequency domain resource configuration information, a beam identifier corresponding to a time-frequency resource, reference time information, or a time position of the target cell relative to a serving cell.

In some implementation, the resource start position includes at least one of:
a resource start symbol number, a resource start slot number, a resource start subframe number, a resource start SFN, a first relative position relative to a first resource for receiving the first information, or a second relative position relative to a second resource for sending feedback information of the first information.

In some implementation, the time position of the target cell relative to the serving cell includes at least one of: a time offset of the target cell relative to the serving cell, or a time position of the target cell.

In some implementation, the time offset of the target cell relative to the serving cell includes at least one of: a symbol offset of the target cell relative to the serving cell, a slot offset of the target cell relative to the serving cell, a subframe offset of the target cell relative to the serving cell, a system frame offset of the target cell relative to the serving cell, or a time unit offset of the target cell relative to the serving cell.

In some implementation, the reference time information includes at least one of: a reference symbol number, a reference slot number, a reference subframe number, or a reference SFN.

In some implementation, the processing module 802 is configured to:
determine a usage mode of the uplink resource based on a protocol agreement; or
determining a usage mode of the uplink resource according to received second information.

In some implementation, the usage mode of the uplink resource includes any one of: the uplink resource being used for an initial transmission of data; and the uplink resource being used for a one-time transmission of data.

In some implementation, the transceiver module 801 is configured to:
in a case where there is no uplink transmission corresponding to a radio bearer, send agreed data using the uplink resource.

In some implementation, the transceiver module 801 is configured to:
in a case where the first information includes SFN information, perform, after obtaining the SFN information of the target cell, the uplink transmission using the uplink resource; or
in a case where the first information does not comprise SFN information, perform, before obtaining the SFN information of the target cell, the uplink transmission using the uplink resource; or
in a case where the first information includes SFN information of a first uplink resource but does not comprise SFN information of a second uplink resource, perform, before obtaining the SFN information of the target cell, the uplink transmission using the second uplink resource, and performing, after obtaining the SFN information of the target cell, the uplink transmission using the first uplink resource and/or the second uplink resource.

In some implementation, the processing module 802 is configured to:
monitor feedback information of the network device starting from a specified position after performing the uplink transmission.

In some implementation, the processing module 802 is configured to:
determine the specified position based on a protocol agreement; or
determine the specified position according to an instruction from the network device.

In some implementation, the transceiver module 801 is configured to:
in a case where the feedback information is not received within a specified time, perform a retransmission of the uplink transmission.

In some implementation, the transceiver module 801 is configured to:
perform the retransmission of the uplink transmission using an initial transmission coding mode of the uplink transmission; or
perform the retransmission of the uplink transmission using a retransmission coding mode of the uplink transmission.

In some implementation, the transceiver module 801 is configured to:
perform the retransmission of the uplink transmission using the uplink resource; or
perform the retransmission of the uplink transmission using a resource indicated by a physical control channel.

In summary, the terminal first receives the first information for configuring the uplink resource of the target cell, and then performs the uplink transmission using the uplink resource. Thus, in the RACH-less cell change process, the terminal may directly perform the uplink transmission using the uplink resource of the target cell configured by the network device, thereby improving the reliability of data transmission.

The communication apparatus 800 may also be a network device, an apparatus in the network device, or an apparatus that may be used in conjunction with the network device.

When the communication apparatus 800 is on a network device side,
the transceiver module 801 is configured to send first information, in which the first information is used to configure an uplink resource of a target cell.

The transceiver module 801 is further configured to receive an uplink transmission from the uplink resource.

In some implementation, sending the first information includes:
sending the first information via at least one of: an RRC message, DCI, or a MAC CE.

In some implementation, the first information includes at least one of:
a resource period, a resource start position, time-frequency domain resource configuration information, a beam identifier corresponding to a time-frequency resource, reference time information, or a time position of the target cell relative to a serving cell.

In some implementation, the resource start position includes at least one of:
a resource start symbol number, a resource start slot number, a resource start subframe number, a resource start SFN, a first relative position relative to a first resource for receiving the first information, or a second relative position relative to a second resource for sending feedback information of the first information.

In some implementation, the time position of the target cell relative to the serving cell includes at least one of: a time offset of the target cell relative to the serving cell, or a time position of the target cell.

In some implementation, the time offset of the target cell relative to the serving cell includes at least one of: a symbol offset of the target cell relative to the serving cell, a slot offset of the target cell relative to the serving cell, a subframe offset of the target cell relative to the serving cell, a system frame offset of the target cell relative to the serving cell, or a time unit offset of the target cell relative to the serving cell.

In some implementation, the reference time information includes at least one of: a reference symbol number, a reference slot number, a reference subframe number, or a reference SFN.

In some implementation, the transceiver module 801 is configured to
send second information, in which the second information indicates a usage mode of the uplink resource.

In some implementation, the usage mode of the uplink resource includes any one of: the uplink resource being used for an initial transmission of data; and the uplink resource being used for a one-time transmission of data.

In some implementation, the processing module 802 is configured to:
in a case where the received uplink transmission is agreed data, determine that there is no uplink transmission corresponding to a radio bearer in a terminal.

In some implementation, the transceiver module 801 is configured to:
send feedback information starting from a specified position after receiving the uplink transmission.

In some implementation, the processing module 802 is configured to:
determine the specified position based on a protocol agreement; or
indicate the specified position to a terminal.

In some implementation, the processing module 802 is configured to:
in a case where retransmission data is received, decode the retransmission data using an initial transmission coding mode of the uplink transmission, or decode the retransmission data using a retransmission coding mode of the uplink transmission.

In some implementation, the transceiver module 801 is configured to:
receive the retransmission data from the uplink resource; or
receive the retransmission data from a resource indicated by a physical control channel.

In summary, the network device first sends the first information for configuring the uplink resource of the target cell, and then receives the uplink transmission via the uplink resource. Thus, in the RACH-less cell change process, the terminal may directly perform the uplink transmission using the uplink resource of the target cell configured by the network device, thereby improving the reliability of data transmission.

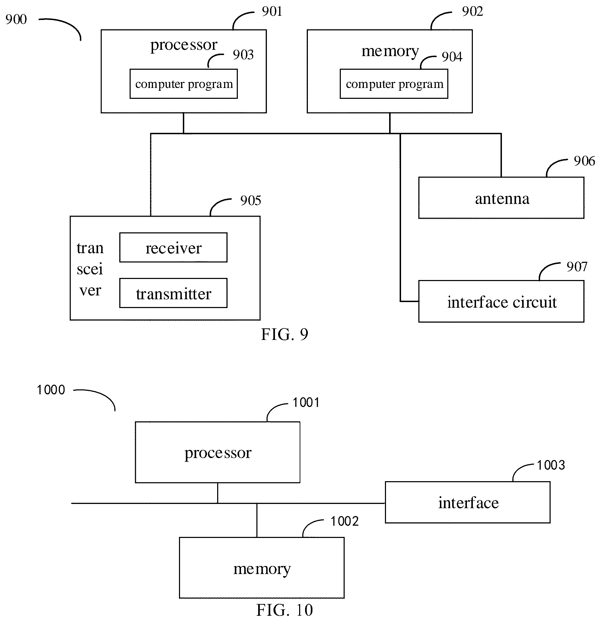

Please refer to FIG. 9, FIG. 9 is a block diagram of a communication apparatus 900 according to an embodiment of the disclosure. The communication apparatus 900 may be a network device, or a terminal, or a chip, a chip system, a processor, etc. that supports the network device to implement the method, or a chip, a chip system, a processor, etc. that supports the terminal to implement the method. The communication apparatus 900 is configured to implement the method in the above method embodiments. For details, please refer to the description in the above method embodiments.

The communication apparatus 900 may include one or more processors 901. The processor 901 may be a general-purpose processor or a special-purpose processor. For example, it may be a baseband processor or a central processing unit. The baseband processor is configured to process communication protocols and communication data, and the central processor is configured to control communication apparatuses (such as base stations, baseband chips, terminals, terminal chips, DU or CU, etc.) to execute computer programs and process computer program data.

In some implementations, the communication apparatus 900 may also include one or more memories 902 on which a computer program 904 is stored. When the computer program 904 is executed by the processor 901, the communication apparatus 900 implements the method in the above method embodiments. In some implementations, the memory 902 may also store data. The communication apparatus 900 and the memory 902 may be set separately or integrated together.

In some implementations, the communication apparatus 900 may also include a transceiver 905 and an antenna 906. The transceiver 905 may be called a transceiving unit, a transceiving machine, or a transceiving circuit, etc., to achieve a transceiving function. The transceiver 905 may include a receiver and a transmitter. The receiver may be called a receiver or a receiving circuit, etc., to achieve a receiving function; and the transmitter may be called a transmitter or a transmitting circuit, etc., to achieve a transmitting function.

In some implementations, the communication apparatus 900 includes one or more interface circuits 907. The interface circuit 907 is configured to receive code instructions and transmit the code instructions to the processor 901. When the code instructions are running on the processor 901, the communication apparatus 900 is caused to implement the method in the above method embodiments.

In an implementation, the processor 901 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit or convey signals.

In an implementation, the processor 901 may store a computer program 903. When the computer program 903 is running on the processor 901, the communication apparatus 900 is caused to implement the method in the above method embodiments. The computer program 903 may be solidified in the processor 901. In this way, the processor 901 may be implemented in hardware.

In an implementation, the communication apparatus 900 may include a circuit that may achieve the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a network device or a terminal, but the scope of the communication apparatus in the disclosure is not limited to this, and the structure of the communication apparatus may not be restricted by FIG. 9. The communication apparatus may be an independent device or part of a larger device. For example, the communication apparatus may be:
(1) an independent IC, or a chip, or a chip system or a subsystem;
(2) a collection including one or more IC, in some implementation, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to FIG. 10, which is a schematic diagram of a chip provided by an embodiment of the disclosure.

A chip 1000 includes a processor 1001 and an interface 1003. There may be one or more processors 1001, and there may be one or more interfaces 1003.

In the case where the chip is configured to implement the functions of the terminal, the network device, a binding support function (BSF) entity or an unified data management (UDM) entity in the embodiments of the disclosure,
the interface 1003 is configured to receive code instructions and transmit the code instructions to the processor; and
the processor 1001 is configured to run the code instructions to execute the method for sending data as described in some of the above embodiments.

In some implementations, the chip 1000 further includes a memory 1002 for storing necessary computer programs and data.

Those skilled in the art may also understand that the various illustrative logical blocks and steps listed in the embodiments of the disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the disclosure.

The embodiments of the disclosure further provide a communication system. The communication system includes the communication apparatus as the terminal, the communication apparatus as the network device, the communication apparatus as a BSF entity, and the communication apparatus as a UDM entity in the aforementioned embodiment of FIG. 9; or the communication system includes the communication apparatus as the terminal, the communication apparatus as the network device, the communication apparatus as a BSF entity, and the communication apparatus as a UDM entity in the aforementioned embodiment of FIG. 10.

The disclosure also provides a readable storage medium for storing instructions. When the instructions are executed by a computer, functions of any one of the above method embodiments are performed.

The disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the disclosure are distinguished merely for convenience of description, and are not intended to limit the scope of embodiments of the disclosure, but also to indicate an order of precedence.

The term "at least one" in the disclosure may also be described as one or more, and the more may be two, three, four, or more. The term "and/or" describes an association relationship between related objects, indicating that three types of relationships may exist. For example, "A and/or B" may mean: A exists alone, both A and B exist simultaneously, or B exists alone, where A and B may be singular or plural. The character "/" generally indicates that the associated objects before and after it have an "or" relationship. The expression "at least one of the following (items)" or similar expressions refer to any combination of these items, including any combination of a single item (piece) or multiple items (pieces). For example, "at least one of a, b, or c" may represent: a, or b, or c, or a and b, or a and c, or b and c, or a, b, and c. Here, a, b, and c may each be single or multiple, which is not limited in the disclosure. In the embodiments of the disclosure, for a technical feature, the technical features in the technical feature are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the disclosure.

Those skilled in the art may clearly understand that for a specific working process of a system, an apparatus and a unit described above reference may be made to a corresponding process in the above method embodiments, which will not be repeated here.

The above are only implementations of the disclosure. However, the protection scope of the disclosure is not limited here. Changes and substitutions that may be easily considered by those skilled in the art shall be included within the protection scope of the disclosure. Therefore, the protection scope of the disclosure shall be subject to the protection scope of claims.

## Claims

1. A method for sending data, performed by a terminal, comprising:
receiving first information, wherein the first information is used to configure an uplink resource of a target cell; and
performing an uplink transmission using the uplink resource.

2. The method of claim 1, wherein receiving the first information comprises:
receiving the first information via at least one of: a radio resource control (RRC) message, downlink control information (DCI), or a medium access control control element (MAC CE).

3. The method of claim 1, wherein the first information comprises at least one of:
a resource period, a resource start position, time-frequency domain resource configuration information, a beam identifier corresponding to a time-frequency resource, reference time information, or a time position of the target cell relative to a serving cell.

4. The method of claim 3, wherein the resource start position comprises at least one of:
a resource start symbol number, a resource start slot number, a resource start subframe number, a resource start system frame number (SFN), a first relative position relative to a first resource for receiving the first information, or a second relative position relative to a second resource for sending feedback information of the first information.

5. The method of claim 3, wherein the time position of the target cell relative to the serving cell comprises at least one of: a time offset of the target cell relative to the serving cell, or a time position of the target cell.

6. The method of claim 5, wherein the time offset of the target cell relative to the serving cell comprises at least one of: a symbol offset of the target cell relative to the serving cell, a slot offset of the target cell relative to the serving cell, a subframe offset of the target cell relative to the serving cell, a system frame offset of the target cell relative to the serving cell, or a time unit offset of the target cell relative to the serving cell.

7. The method of claim 3, wherein the reference time information comprises at least one of: a reference symbol number, a reference slot number, a reference subframe number, or a reference SFN.

8. The method of claim 1, further comprising:
determining a usage mode of the uplink resource based on a protocol agreement; or
determining a usage mode of the uplink resource according to received second information.

9. The method of claim 8, wherein the usage mode of the uplink resource comprises any one of: the uplink resource being used for an initial transmission of data; and the uplink resource being used for a one-time transmission of data.

10. The method of any one of claims 1 to 9, wherein performing the uplink transmission using the uplink resource comprising:
in a case where there is no uplink transmission corresponding to a radio bearer, sending agreed data using the uplink resource.

11. The method of any one of claims 1 to 9, wherein performing the uplink transmission using the uplink resource comprising:
in a case where the first information comprises SFN information, performing, after obtaining the SFN information of the target cell, the uplink transmission using the uplink resource; or
in a case where the first information does not comprise SFN information, performing, before obtaining the SFN information of the target cell, the uplink transmission using the uplink resource; or
in a case where the first information comprises SFN information of a first uplink resource but does not comprise SFN information of a second uplink resource, performing, before obtaining the SFN information of the target cell, the uplink transmission using the second uplink resource, and performing, after obtaining the SFN information of the target cell, the uplink transmission using the first uplink resource and/or the second uplink resource.

12. The method of any one of claims 1 to 9, further comprising:
monitoring feedback information of the network device starting from a specified position after performing the uplink transmission.

13. The method of claim 12, further comprising:
determining the specified position based on a protocol agreement; or
determining the specified position according to an instruction from the network device.

14. The method of claim 12, further comprising:
in a case where the feedback information is not received within a specified time, performing a retransmission of the uplink transmission.

15. The method of claim 14, wherein performing the retransmission of the uplink transmission comprises:
performing the retransmission of the uplink transmission using an initial transmission coding mode of the uplink transmission; or
performing the retransmission of the uplink transmission using a retransmission coding mode of the uplink transmission.

16. The method of claim 14, wherein performing the retransmission of the uplink transmission comprises:
performing the retransmission of the uplink transmission using the uplink resource; or
performing the retransmission of the uplink transmission using a resource indicated by a physical control channel.

17. A method for sending data, performed by a network device, comprising:
sending first information, wherein the first information is used to configure an uplink resource of a target cell; and
receiving an uplink transmission from the uplink resource.

18. The method of claim 17, wherein sending the first information comprises:
sending the first information via at least one of: a radio resource control (RRC) message, downlink control information (DCI), or a medium access control control element (MAC CE).

19. The method of claim 17, wherein the first information comprises at least one of:
a resource period, a resource start position, time-frequency domain resource configuration information, a beam identifier corresponding to a time-frequency resource, reference time information, or a time position of the target cell relative to a serving cell.

20. The method of claim 19, wherein the resource start position comprises at least one of:
a resource start symbol number, a resource start slot number, a resource start subframe number, a resource start system frame number (SFN), a first relative position relative to a first resource for receiving the first information, or a second relative position relative to a second resource for sending feedback information of the first information.

21. The method of claim 19, wherein the time position of the target cell relative to the serving cell comprises at least one of: a time offset of the target cell relative to the serving cell, or a time position of the target cell.

22. The method of claim 21, wherein the time offset of the target cell relative to the serving cell comprises at least one of: a symbol offset of the target cell relative to the serving cell, a slot offset of the target cell relative to the serving cell, a subframe offset of the target cell relative to the serving cell, a system frame offset of the target cell relative to the serving cell, or a time unit offset of the target cell relative to the serving cell.

23. The method of claim 19, wherein the reference time information comprises at least one of: a reference symbol number, a reference slot number, a reference subframe number, or a reference SFN.

24. The method of claim 17, further comprising:
sending second information, wherein the second information indicates a usage mode of the uplink resource.

25. The method of claim 24, wherein the usage mode of the uplink resource comprises any one of: the uplink resource being used for an initial transmission of data; and the uplink resource being used for a one-time transmission of data.

26. The method of any one of claims 17 to 25, further comprising:
in a case where the received uplink transmission is agreed data, determining that there is no uplink transmission corresponding to a radio bearer in a terminal.

27. The method of any one of claims 17 to 25, further comprising:
sending feedback information starting from a specified position after receiving the uplink transmission.

28. The method of claim 27, further comprising:
determining the specified position based on a protocol agreement; or
indicating the specified position to a terminal.

29. The method of claim 28, further comprising:
in a case where retransmission data is received, decoding the retransmission data using an initial transmission coding mode of the uplink transmission, or decoding the retransmission data using a retransmission coding mode of the uplink transmission.

30. The method of claim 29, wherein receiving the retransmission data comprises:
receiving the retransmission data from the uplink resource; or
receiving the retransmission data from a resource indicated by a physical control channel.

31. A terminal, comprising:
a transceiver module configured to receive first information, wherein the first information is used to configure an uplink resource of a target cell,
wherein the transceiver module is further configured to perform an uplink transmission using the uplink resource.

32. A network device, comprising:
a transceiver module configured to send first information, wherein the first information is used to configure an uplink resource of a target cell,
wherein the transceiver module is further configured to receive an uplink transmission from the uplink resources.

33. A communication apparatus comprising a processor and a memory, wherein the memory stores a computer program, and the processor executes the computer program stored in the memory to cause the communication apparatus to perform the method according to any one of claims 1 to 16, or the processor executes the computer program stored in the memory to cause the communication apparatus to perform the method according to any one of claims 17 to 30.

34. A communication system, comprising a terminal and a network device,
wherein the terminal is configured to perform the method according to any one of claims 1 to 16, and the network device is configured to perform the method according to any one of claims 17 to 30.

35. A computer-readable storage medium configured to store instructions which, when executed, cause the method according to any one of claims 1 to 16 to be implemented, or cause the method according to any one of claims 17 to 30 to be implemented.
